**Europäisches Patentamt**

**European Patent Office**

**Office européen des brevets**

(19)

(11) **EP 1 585 347 A1**

(12) **EUROPEAN PATENT APPLICATION**

(43) Date of publication:
**12.10.2005 Bulletin 2005/41**

(51) Int Cl.⁷: **H04N 9/78**, H04N 11/14

(21) Application number: **04007854.5**

(22) Date of filing: **31.03.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL LT LV MK** | (72) Inventors:<br>• **Shan, Pei-Ming**<br>  **Hsinchu City 300 (TW)**<br>• **Peng, Uriah**<br>  **Taipei City 106 (TW)** |
| (71) Applicant: **Sunplus Technology Co., Ltd**<br>**Hshinchu (TW)** | (74) Representative: **Becker Kurig Straus**<br>**Patentanwälte**<br>**Bavariastrasse 7**<br>**80336 München (DE)** |

(54) **Method of inter-frame Y/C seperation of NTSC**

(57)    The present invention discloses a method of inter-frame Y/C separation, adapted for NTSC. The method first samples a composite video signal for temporarily storing a plurality of sampled data $F_mP_{x,y}$, wherein the $F_mP_{x,y}$ represents data of the y pixel at the x line of the frame m, and the m, x and y are integers larger than, or equal to, 0. Then the method measures a plurality of luma data $Y_{x,y}$ by the $F_{m+1}P_{x,y}$, the $F_mP_{x,y}$, the $F_{m-1}P_{x,y}$ and the $F_{m-2}P_{x,y}$, wherein $Y_{x,y}$ represents luma data of the y pixel of the x line. Finally, the method measures a plurality of chroma data $C_{x,y}$ by the $F_{m+1}P_{x,y}$, the $F_mP_{x,y}$, the $F_{m-1}P_{x,y}$ and the $F_{m-2}P_{x,y}$, wherein $C_{x,y}$ represents chroma data of the y pixel of the x line.

```
sampling the composite
video signal for obtaining     ─── S301
sampled signal Fm Px,y
```

$$\text{luma data } Y_{x,y} = \left( F_{m+1}P_{x,y} + F_mP_{x,y} + F_{m-1}P_{x,y} + F_{m-2}P_{x,y} \right)/4 \qquad \text{S302}$$

$$\text{chroma data } C_{x,y} = \pm \left( F_mP_{x,y} + F_{m-2}P_{x,y} - F_{m+1}P_{x,y} - F_{m-1}P_{x,y} \right)/4 \qquad \text{S303}$$

**FIG. 3**

EP 1 585 347 A1

**Description**

BACKGROUND OF THE INVENTION

Field of the Invention

The present invention relates to a 3-D video decoding method, adapted for NTSC system, and more particularly to a method of inter-frame Y/C separation, adapted for NTSC system.

Description of the Related Art

With the advance of technology, electronic devices, such as television, have been widely used to transmit news, information or distant images. Moreover, monitor systems are used to monitor the situations around houses. The systems or devices can transmit video signals from the senders to the receivers.

Light is composed of red (R), green (G) and blue (B) colors. Video signals to be transmitted can be transformed into the signals thereof for transmission. Due to the limitation of the transmission bandwidth, the video signals are transformed into luma data (Y) and chroma data (U and V) for solving the issue of bandwidth. For example, the relationships between R, G and B, and Y, U and V are: $Y = 0.299R + 0.587G + 0.114B$ ; $U = 0.493( B - Y )$ ; $V = 0.877( R - Y )$. The weightings to R, G and B of the Y formula represent the sensitivities of naked eye to different colors. U and V represent blue and red after the luma is removed. For white light, U and V are 0, which means that there is no chrominance.

During signal transmission, the chroma data are carried by sub-carrier signals and then mixed with luma data. Under the standard of National Television Standards Committee (NTSC), the signals are modulated into composite video signals with the relationship of $Y + U*\sin(\omega t) + V*\cos(\omega t)$, wherein $\omega$ is equal to $2\pi*Fsc$, and Fsc represents the frequency of sub-carrier signal.

After the receiver receives the composite video signals, the signals should be sampled first. A comb filter samples the signals in four folds frequency of Fsc. Therefore, each line of NTSC comprises 910 sample points. Each frame of NTSC has 525 lines. Accordingly, each frame of NTSC has 477,750 sample points.

Generally, the essential part of the video decoding technology is the separation of luma and chroma. The Y/C separation affects the image quality. For the high quality of image, 3-D comb filter has been widely used.

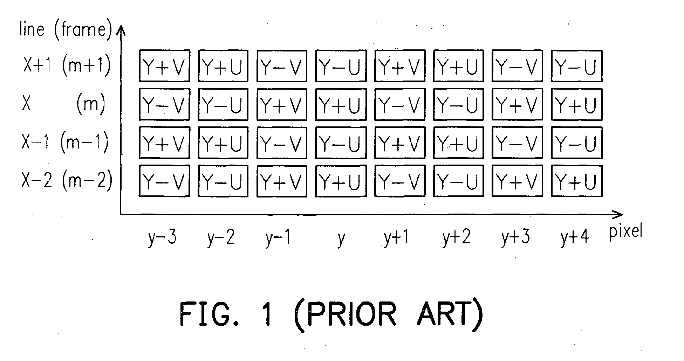

When the 3-D comb filter processes the composite video signals, the signals are sampled by 90-degree phase difference. For NTSC, the signals are Y+V, Y+U, Y-V and Y-U when the sample phases are 0, $0.5\pi$, $\pi$ and $1.5\pi$, respectively. FIG. 1 is a sampling result of the frame of NTSC. Referring to FIG. 1, the vertical axis represents the position x of the line in the frame, and the horizontal axis represents the position y of the pixel in the line. When two sampled data are in the neighboring frames and in the same position, the phase error of the two data is 180 degree. The sampling relationship of the neighboring frames can also be interpreted by FIG. 1 by replacing the vertical axis with the serial number m of the frame.

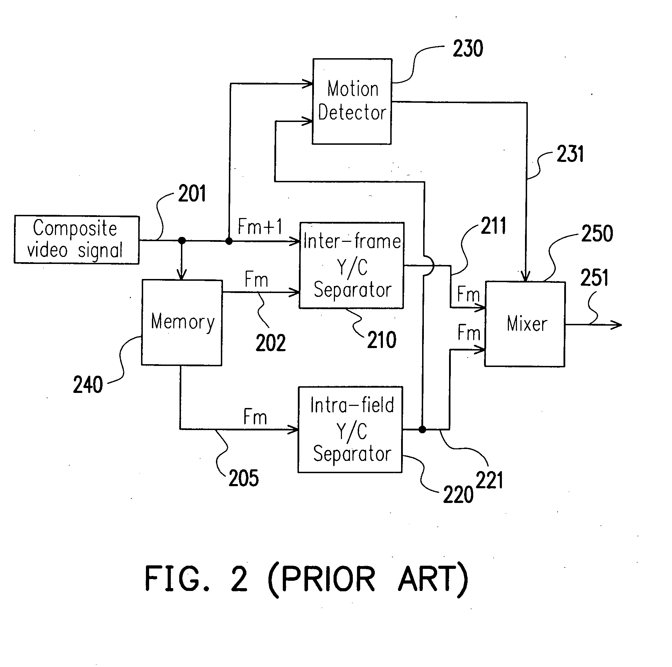

FIG. 2 is a block diagram of a prior art 3-D comb filter. Referring to FIG. 2, the prior comb filter comprises an inter-frame Y/C separator 210, a 2-D intra-field Y/C separator, i.e., 2-D comb filter, 220, a motion detector 230, a memory 240 and a mixer 250. The composite video signal 201 is a sampled signal, and the $F_{m+1}$ represents the composite video signal of the m+1 frame. The memory 240 temporarily stores the composite video signal 201 and provides the composite video signal 205 of the frame m. The 2-D comb filter 220 receives the composite video signal 205 and performs Y/C separation by the relationship between the pixels, outputting the separated video signal 221.

The Y/C separation of the motion video signal is finished by the 2-D comb filter 220. However, the 2-D comb filter 220 results in edge obscure for still video signal. In order to improve the image quality, the still video signal is processed by the inter-frame Y/C separator 210. The prior art inter-frame Y/C separator 210 receives the sampled data of the $F_{m+1}$ and $F_m$ simultaneously, and performs Y/C separation by the timing relationship between the pixels, outputting the separated video signal 211. The motion detector 230 determines whether the composite video signal 201 is a motion or a still signal. The prior art motion detector 230 is adapted to receive the composite video signal 201 and the separated video signal 221 and measures the luma difference and chroma difference of the neighboring frames, outputting the selected signal 231 thereby. The mixer 250 selects the separated video signals 221 or 211, or mixes them according to the selected signal 231, outputting the separated video signal 251.

Following are the descriptions of the prior art method of intra-frame Y/C separation as to NTSC. Referring to FIG. 1, the prior art method adds and averages the composite video signals of the pixels with the same position, such as the yth pixel, of the neighboring frames for measuring the luma data; if one minuses another, the chroma data can be obtained. If noises are added during the modulation or signal transmission, the noise reduces the quality of the images.

SUMMARY OF THE INVENTION

Therefore, the object of the present invention is to provide a method of inter-frame Y/C separation, adapted to improve the immunity of noise and precisely separate the luma data and chroma data.

According to the object described above, the present invention discloses a method of inter-frame Y/C separation, which is adapted for NTSC system. The method comprises: sampling a composite video signal for temporarily storing a plurality of sampled data $F_mP_{x,y}$, wherein the $F_mP_{x,y}$ represents data of the y pixel at the x line of the frame m, and the m, x and y are integers larger than, or equal to, 0; measuring a plurality of luma data $Y_{x,y}$ by a $F_{m+1}P_{x,y}$, the $F_mP_{x,y}$, a $F_{m-1}P_{x,y}$ and a $F_{m-2}P_{x,y}$, wherein $Y_{x,y}$ represents luma data of the y pixel of the x line; and measuring a plurality of chroma data $C_{x,y}$ by the $F_{m+1}P_{x,y}$, the $F_mP_{x,y}$, the $F_{m-1}P_{x,y}$ and the $F_{m-2}P_{x,y}$, wherein $C_{x,y}$ represents chroma data of the y pixel of the x line.

According to the preferred method of inter-frame Y/C separation of the present invention, the formula for measuring the luma data $Y_{x,y}$ is: $Y_{x,y} = (F_{m+1}P_{x,y} + F_mP_{x,y} + F_{m-1}P_{x,y} + F_{m-2}P_{x,y})/4$.

According to the preferred method of inter-frame Y/C separation of the present invention, the step of sampling the composite video signal is performed by 4 folds the frequency of a sub-carrier signal, and the phase of the sub-carrier signal is 0, $0.5\pi$, $\pi$, or $1.5\pi$.

According to the preferred method of inter-frame Y/C separation of the present invention, the formula for measuring the chroma data $C_{x,y}$ is: $C_{x,y} = \pm (F_mP_{x,y} + F_{m-2}P_{x,y} - F_{m+1}P_{x,y} - F_{m-1}P_{x,y})/4$.

The present invention uses four-frame data for Y/C separation. Noise interference can be reduced and the precise Y/C data can be obtained under NTSC system.

In order to make the aforementioned and other objects, features and advantages of the present invention understandable, a preferred embodiment accompanied with figures is described in detail below.

BRIEF DESCRIPTION OF THE DRAWINGS

FIG. 1 is a sampling result of the frame of NTSC.

FIG. 2 is a block diagram of a prior art 3-D comb filter.

FIG. 3 is a flowchart of an exemplary method of inter-frame Y/C separation of the present invention.

FIG. 4 is a block diagram showing a preferred method of inter-frame Y/C separation of the present invention.

DESCRIPTION OF SOME EMBODIMENTS

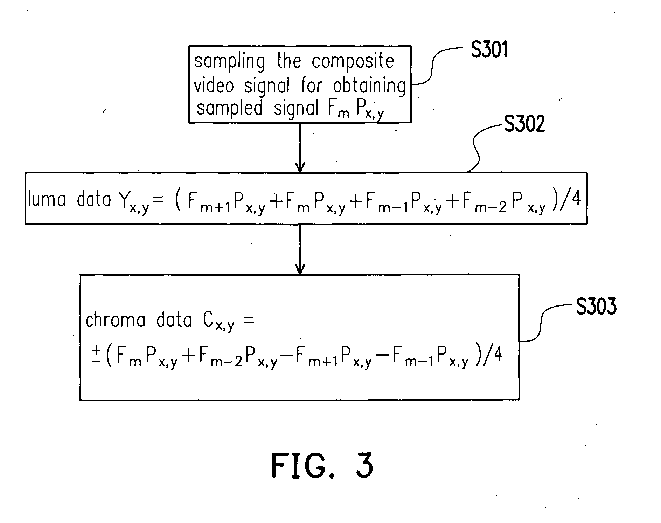

FIG. 3 is a flowchart of an exemplary method of inter-frame Y/C separation, adapted for NTSC system, of the present invention. Referring to FIG. 1, and FIG. 3, step S301 samples the composite video signal and the sampled data $F_mP_{x,y}$, wherein the $F_mP_{x,y}$ represents data of the y pixel at the x line of the frame m, and the m, x and y are integers larger than, or equal to, 0. In the embodiment, the step S301 is performed by 4 folds the frequency of a sub-carrier signal, and the phase of the sub-carrier signal is 0, $0.5\pi$, $\pi$, or $1.5\pi$.

The step S302 measures a plurality of luma data $Y_{x,y}$, wherein $Y_{x,y}$ represents luma data of the y pixel of the x line. The formula for measuring the luma data is: $Y_{x,y} = (F_{m+1}P_{x,y} + F_mP_{x,y} + F_{m-1}P_{x,y} + F_{m-2}P_{x,y})/4$. In this embodiment, $Y_{x,y}$ is, for example, the luma data of the frame m. Under NTSC of FIG. 1, wherein the vertical axis represents frame and the horizontal axis represents pixel, $Y_{x,y} = ((Y-U)+ (Y+U) + (Y-U) + (Y+U)) / 4=Y$. The luma data Y of the y pixel of the x line are separated from the composite video signal.

The step S303 measures the chroma data $C_{x,y}$), wherein the $C_{x,y}$ represents chroma data of the y pixel of the x line. The formula for measuring the chroma data $C_{x,y}$ is: $C_{x,y} = \pm (F_mP_{x,y} + F_{m-2}P_{x,y} - F_{m+1}P_{x,y} - F_{m-1}P_{x,y})/4$. In this embodiment, the $C_{x,y}$ is, for example, the luma data of the frame m. Under NTSC of FIG. 1, wherein the vertical axis represents frame and the horizontal axis represents pixel. Accordingly, $C_{x,y} = ((Y+U) + (Y+U) - (Y-U) - (Y-U)) / 4=U$, and the luma data C, i. e., U or V, are separated from the composite video signals.

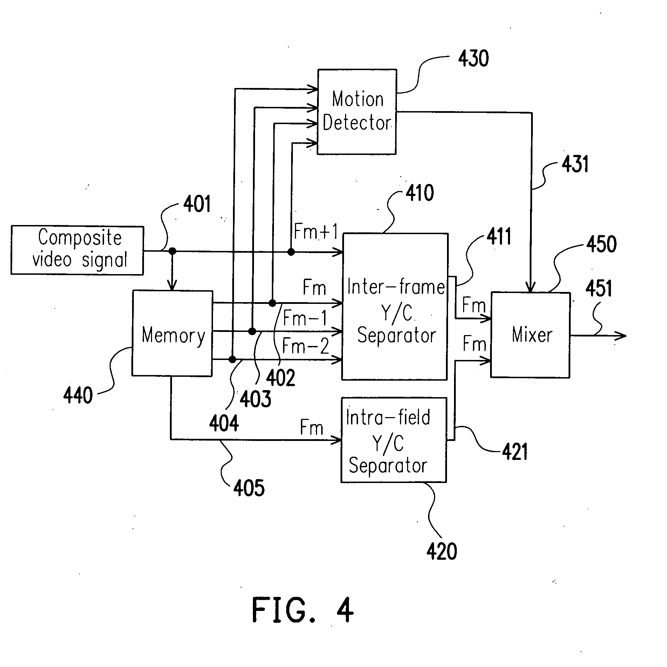

According to the method of inter-frame Y/C separation, following are the description of a preferred embodiment of the present invention. FIG. 4 is a block diagram showing a preferred method of inter-frame Y/C separation of the present invention. Referring to FIG. 4, a 3-D comb filter comprises: an inter-frame Y/C separator 410, a 2-D intra-field Y/C separator, i.e., 2-D comb filter, 420, a motion detector 430, a memory 440 and a mixer 450, wherein the inter-frame Y/C separator 410 performs the function of the present invention. The composite video signal 401 is a sampled signal, and the $F_{m+1}$ represents the composite video signal of the m+1 frame. The memory 440 temporarily stores the composite video signal 401 and provides the composite video signal 402 of the frame m, the composite video signal 403 of the frame m-1 and the composite video signal 404 of the frame m-2. The memory 440 also provides the composite video signal 405 of the frame m. The 2-D comb filter 420 receives the composite video signal 405 and performs Y/C separation by the relationship between the pixels, outputting the separated video signal 421.

The Y/C separation of the motion video signal is finished by the 2-D comb filter 420. In order to improve the image quality, the still video signal is processed by the inter-frame Y/C separator 410. The inter-frame Y/C separator 410 receives the sampled data of the $F_{m+1}$, $F_m$, $F_{m-1}$ and $F_{m-2}$ simultaneously, and uses the method of inter-frame Y/C separation of the present invention for outputting the separated video signal 411. The motion detector 430 determines whether the composite video signal 401 is a motion or a still signal. The motion detector 430 also receives the sampled data of the $F_{m+1}$, $F_m$, $F_{m-1}$ and $F_{m-2}$ and measures the luma difference and chroma difference thereof, outputting the selected signal 431 thereby. The mixer 450 selects the separated video signals 421 or 411, or mixes them according to the selected signal 431, outputting the separated video signal 451.

Although the present invention has been described in terms of exemplary embodiments, it is not limited thereto. Rather, the appended claims should be constructed broadly to include other variants and embodiments of the invention which may be made by those skilled in the field of this art without departing from the scope and range of equivalents of the invention.

**Claims**

1. A method of inter-frame Y/C separation, adapted for NTSC system, comprising:

   sampling a composite video signal for temporarily storing a plurality of sampled data $F_mP_{x,y}$, wherein the $F_mP_{x,y}$ represents data of the y pixel at the x line of the frame m, and the m, x and y are integers larger than, or equal to, 0;
   measuring a plurality of luma data $Y_{x,y}$ by a $F_{m+1}P_{x,y}$, the $F_mP_{x,y}$, a $F_{m-1}P_{x,y}$ and a $F_{m-2}P_{x,y}$, wherein $Y_{x,y}$ represents luma data of the y pixel of the x line; and
   measuring a plurality of chroma data $C_{x,y}$ by the $F_{m+1}P_{x,y}$, the $F_mP_{x,y}$, the $F_{m-1}P_{x,y}$ and the $F_{m-2}P_{x,y}$, wherein $C_{x,y}$ represents chroma data of the y pixel of the x line.

2. The method of inter-frame Y/C separation of claim 1, wherein a formula for measuring the luma data is:

$$Y_{x,y} = ( F_{m+1}P_{x,y} + F_mP_{x,y} + F_{m-1}P_{x,y} + F_{m-2}P_{x,y})/4.$$

3. The method of inter-frame Y/C separation of claim 1, wherein the step of sampling the composite video signal is performed by 4 folds the frequency of a sub-carrier signal, and the phase of the sub-carrier signal is 0, 0.5π, π, or 1.5π.

4. The method of inter-frame Y/C separation of claim 3, wherein a formula for measuring the chroma data is:

$$C_{x,y} = \pm ( F_mP_{x,y} + F_{m-2}P_{x,y} - F_{m+1}P_{x,y} - F_{m-1}P_{x,y})/4.$$

5. The method of inter-frame Y/C separation of claim 4, wherein the chroma data $C_{x,y}$ are the chroma data of the frame m.

FIG. 1 (PRIOR ART)

FIG. 2 (PRIOR ART)

sampling the composite video signal for obtaining sampled signal $F_m P_{x,y}$ — S301

— S302

luma data $Y_{x,y} = ( F_{m+1}P_{x,y} + F_m P_{x,y} + F_{m-1}P_{x,y} + F_{m-2}P_{x,y} )/4$

chroma data $C_{x,y} =$
$\pm ( F_m P_{x,y} + F_{m-2}P_{x,y} - F_{m+1}P_{x,y} - F_{m-1}P_{x,y} )/4$

— S303

# FIG. 3

FIG. 4

**European Patent Office**

## EUROPEAN SEARCH REPORT

Application Number

EP 04 00 7854

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 541 669 A (YAMAGUCHI NORIYUKI ET AL) 30 July 1996 (1996-07-30) <br> * column 1, lines 14-21 * <br> * column 2, lines 11-28 * <br> * column 2, lines 36-48 * <br> * column 2, line 65 - column 3, line 28 * <br> * figures 10-15 * <br> * column 7, lines 61-64 * <br> ----- | 1-5 | H04N9/78 <br> H04N11/14 |

TECHNICAL FIELDS SEARCHED (Int.Cl.7)

H04N

The present search report has been drawn up for all claims

| Place of search | Date of completion of the search | Examiner |
|---|---|---|
| Munich | 1 September 2004 | Lindgren, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...........................................................................

& : member of the same patent family, corresponding document

EPO FORM 1503 03.82 (P04C01)

**EP 1 585 347 A1**

## ANNEX TO THE EUROPEAN SEARCH REPORT
## ON EUROPEAN PATENT APPLICATION NO.

EP 04 00 7854

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2004

| Patent document cited in search report | | Publication date | Patent family member(s) | | Publication date |
|---|---|---|---|---|---|
| US 5541669 | A | 30-07-1996 | JP | 2786304 B2 | 13-08-1998 |
| | | | JP | 3283794 A | 13-12-1991 |
| | | | CA | 2039278 A1 | 30-09-1991 |
| | | | KR | 9402197 B1 | 18-03-1994 |

EPO FORM P0459

For more details about this annex : see Official Journal of the European Patent Office, No. 12/82

10